# EUROPÄISCHE PATENTANMELDUNG

(11) **EP 1 083 078 A2**
(43) Veröffentlichungstag der Anmeldung: **14.03.2001**
(21) Anmeldenummer: 00118204.7
(22) Anmeldetag: 31.08.2000
(51) Int. Cl.: B60K 35/00

(54) **Verfahren und Vorrichtung zur Nutzerführung in einem Kraftfahrzeug**

(30) Priorität: 10.09.1999 DE 19943348
(71) Anmelder: Volkswagen Aktiengesellschaft, 38436 Wolfsburg (DE)
(72) Erfinder: Müller, Kai, Dr., 38531 Rötgesbüttel (DE); Crull, Torsten, 38106 Braunschweig (DE)

(57) **Zusammenfassung**

Die Erfindung betrifft ein Verfahren und eine Vorrichtung (1) zur Nutzerführung in einem Kraftfahrzeug, umfassend eine Multifunktions-Bedieneinrichtung mit einer Anzeigeeinrichtung (2) mit zugeordnetem Steuergerät (4) und einer Anzahl voneinander unabhängigen Bedienelementen (11-14), wobei die Bedienelemente (11-14) direkt oder mittelbar über Steuergeräte (7-10) mit zu bedienenden Komponenten verbunden sind, wobei das Steuergerät (4) der Multifunktions-Bedieneinrichtung direkt oder über deren zugeordnete Steuergerät (7-10) mit den Bedienelementen (11-14) verbunden ist, das im Steuergerät (4) der Multifunktions-Bedieneinrichtung Hilfstexte für die einzelnen Bedienelemente (11-14) abgelegt sind, die Multifunktions-Bedieneinrichtung mittels eines Bedienelementes in einen Nutzerführungsmodus umschaltbar ist, in dem das Steuergerät (4) der Multifunktions-Bedieneinrichtung die Betätigung eines Bedienelementes (11-14) erfaßt, das Bedienelement (11-14) identifiziert und den zugehörigen Hilfstext auf der Anzeigeeinrichtung (2) darstellt.

## Beschreibung

Die Erfindung betrifft ein Verfahren und eine Vorrichtung zur Nutzerführung in einem Kraftfahrzeug.

In modernen Kraftfahrzeugen existieren eine Vielzahl von Komfort- und Systemkomponenten, was wiederum eine Vielzahl von Bedienelementen erfordert. Des weiteren führt dies zu einer Erweiterung der vorhandenen Bedienelemente sowie zur verstärkten Mehrfachbelegung von Bedienelementen. Die Bedienelemente sind dabei je nach Anwendungsgebiet als Tastatur, Schalter oder ähnliches ausgebildet. Diese Vielzahl vorhandener und teilweise sehr komplexer Bedienelemente führt jedoch häufig zu einer Überforderung des Nutzers. Nur beispielhaft sei auf die Aktivierung eines Regensensors verwiesen. Ein solcher Regensensor wird üblicherweise durch eine erste Schaltungsstellung des Schalters für den Scheibenwischer aktiviert. Nach Abschaltung der Zündung wird der Regensensor deaktiviert, auch wenn der Schalter noch in der ersten Schalterstellung steht.
Bei erneuter Zündung bleibt der Regensensor deaktiviert, um ein versehentliches Einschalten des Wischers zu vermeiden. Daher muß der Nutzer den Schalter zunächst zurücksetzen und wieder in die erste Schalterstellung bewegen, um den Regensensor zu aktivieren. Derartige komplexe Bedienstrukturen kann sich ein gewöhnlicher Nutzer nur sehr schwer merken, so daß dieser häufig nicht weiß, was zu tun ist, um die gewünschte Funktion einzustellen. Die Verwendung von Benutzerhandbüchern ist insbesondere bei Kraftfahrzeuganwendungen wenig praktikabel.

Der Erfindung liegt daher das technische Problem zugrunde, ein Verfahren und eine Vorrichtung zur Nutzerführung in einem Kraftfahrzeug zu schaffen, mittels derer ein Nutzer über die Funktionalität vorhandener Bedienelemente einfach informierbar ist.

Die Lösung des technischen Problems ergibt sich durch die Gegenstände mit den Merkmalen der Patentansprüche 1 und 5. Weitere vorteilhafte Ausgestaltungen der Erfindung ergeben sich aus den Unteransprüchen.

Hierzu wird eine Multifunktions-Bedieneinrichtung mit einer Anzeigeeinrichtung und einem Steuergerät benutzt, das direkt oder über die Steuergeräte anderer Komponenten mit den jeweiligen Bedienelementen verbunden ist. Mittels eines der Multifunktions-Bedieneinrichtung zugeordneten Bedienelementes kann dieses in ein Nutzerführungsmodus umgeschaltet werden. Bei einer anschließenden Betätigung eines Bedienelementes erfaßt dann das Steuergerät der Multifunktions-Bedieneinrichtung das Betätigungssignal, identifiziert das zugehörige Bedienelement und stellt auf der Anzeigeeinrichtung einen Hilfstext dar, mittels dessen sich der Nutzer über die Funktionalität des Bedienelementes informieren kann.

In einer weiteren bevorzugten Ausführungsform wird alternativ zum Hilfstext ein speziell auf das ausgewählte Bedienelement zugeschnittenes Optionsmenü angeboten, mittels dessen die Einstellungen des Bedienelementes veränderbar sind. So kann beispielsweise für den zuvor erläuterten Schalter der Scheibenwaschanlage eingestellt werden, daß die Stellung für den Regensensor statisch ist, d.h. bei einer Position in der ersten Stellung wird der Regensensor aktiviert. Ein anderer denkbarer Anwendungsfall wäre die wahlweise Umschaltung von Temperaturangaben zwischen Celsius und Fahrenheit einer Temperaturregelung - und / oder anzeige. Vorzugsweise ist der Multifunktions-Bedieneinnchtung ein Reset- Schalter zugeordnet, mittels dessen alle oder speziell für einzelne Bedienelemente die über das Optionsmenü vorgenommenen Einstellungen zurücksetzbar sind.

Weiter kann vorgesehen sein, daß die Einstellungen im Optionsmenü wahlweise temporär oder permanent vornehmbar sind. Bei einer temporären Einstellung wird diese dann beispielsweise durch das Abschalten der Zündung gelöscht.

Besonders einfach läßt sich die Verbindung zwischen dem Steuergerät der Multifunktions-Bedieneinrichtung und den Steuergeräten der Bedienelemente über einen CAN- Bus realisieren.

Um den Nutzer nicht zu verwirren, kann vorgesehen sein, daß die Betätigung des Bedienelementes funktional nicht ausgeführt wird.

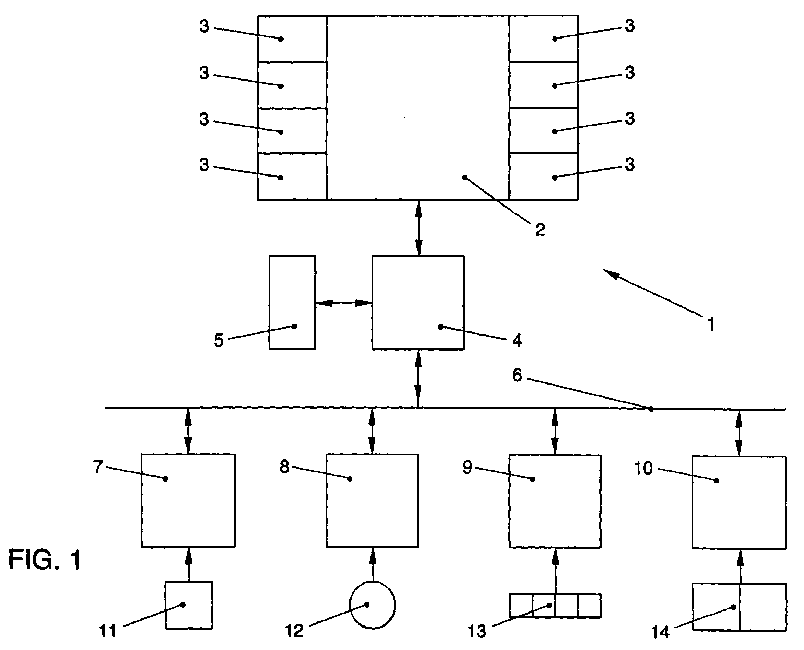

Die Erfindung wird nachfolgend anhand eines bevorzugten Ausführungsbeispieles näher erläutert. Die einzige Figur zeigt ein schematisches Blockschaltbild einer Vorrichtung zur Nutzerführung in einem Kraftfahrzeug.

Die Vorrichtung 1 umfaßt eine Multifunktions-Bedieneinrichtung, das eine Anzeigeeinrichtung 2, multifunktionale Bedienelemente 3, ein Steuergerät 4 und einen Speicher 5 umfaßt. Das Steuergerät 4 der Multifunktions-Bedieneinrichtung ist über einen Bus, insbesondere über einen CAN- Bus 6 mit einer Vielzahl von Steuergeräten 7-10 bidirektional verbunden, wobei die einzelnen Steuergeräte 7-10 mit ihnen zugeordneten Bedienelementen 11-14 verbunden sind, die jeweils entsprechend ihrer Bedienfunktion ausgebildet sind. Die Bedienelemente 11-14 sind dabei beispielsweise als Taster, Drehknopf, Tastfelder, Wippschalter oder als Einfach- oder Mehrstufen- Schalter ausgebildet.

Mittels der Multifunktions-Bedieneinrichtung lassen sich verschiedenen Funktionen wie beispielsweise Navigation, Audio- Video- Einstellungen oder Klimaeinstellungen vornehmen. Hierzu kann der Nutzer beispielsweise mittels weiterer separater Bedienelemente ein Navigationsmenü auswählen, das dann auf der Anzeigeeinrichtung 2 mittels des Steuergerätes 4 dargestellt wird. Des weiteren paßt das Steuergerät 4 die Funktionalität der Bedienelemente 3 an das ausgewählte Menü an.

Mittels eines Bedienelementes 3 oder eines weiteren nicht dargestellten Bedienelementes kann die Multifunktions-Bedieneinrichtung in einen Nutzerführungsmodus geschaltet werden. Das Steuergerät 4 erfaßt dieses Umschaltsignal und wechselt in einen Empfangs- oder Erwartungsmodus. Wird anschließend ein Bedienelement 11-14 betätigt, so wird dies durch das zugehörige Steuergerät 7-10 erfaßt und über den CAN- Bus 6 an das Steuergerät 4 der Multifunktions-Bedieneinrichtung übertragen. Das Steuergerät 4 empfängt dieses Signal und identifiziert das zugeordnete Steuergerät 7-10. Das Steuergerät 4 legt dann eine Adresse an den Speicher 5 an, liest einen zu dem Bedienelement 11-14 zugehörigen Hilfstext aus und stellt diesen auf der Anzeigeeinrichtung 2 dar. Mittels dieses Hilfstextes kann sich dann der Nutzer über die Funktionalität des Bedienelementes informieren, insbesondere was und wie eingestellt werden kann. Neben dem Hilfstext können auch Optionsmenüs für das Bedienelement 11-14 dargestellt werden. Hierzu müssen zusätzlich von dem Steuergerät 7-10 die aktuellen Einstellungen abgefragt werden und in dem Optionsmenü als Status angezeigt werden. Nimmt dann der Nutzer über das Optionsmenü Veränderungen an der Funktionalität oder an den Einstellungen vor, so müssen diese an das zugehörige Steuergerät 7-10 übertragen werden.

Des weiteren kann nach Umschaltung in den Nutzerführungsmodus sofort ein weiterer Hilfstext auf der Anzeigeeinrichtung 2 dargestellt werden, mittels dessen der Nutzer über die Wirkungsweise des Nutzerführungsmodus informiert wird und zur Betätigung des den Nutzer interessierenden Bedienelementes 11-14 aufgefordert wird.

## Patentansprüche

1. Vorrichtung zur Nutzerführung in einem Kraftfahrzeug, umfassend mindestens eine Multifunktions-Bedieneinrichtung mit einer Anzeigeeinrichtung (2) mit einem zugeordneten Steuergerät (4) und einer Anzahl voneinander unabhängigen Bedienelementen (11-14), wobei die Bedienelemente (11-14) direkt oder mittelbar über Steuergeräte (7-10) mit zu bedienenden Komponenten verbunden sind,
**dadurch gekennzeichnet, daß**
das Steuergerät (4) der Multifunktions-Bedieneinrichtung direkt oder über deren zugeordnete Steuergerät (7-10) mit den Bedienelementen (11-14) verbunden ist, daß im Steuergerät (4) der Multifunktions-Bedieneinrichtung Hilfstexte für die einzelnen Bedienelemente (11-14) abgelegt sind und die Multifunktions-Bedieneinrichtung mittels eines Bedienelementes in einen Nutzerführungsmodus umschaltbar ist, in dem das Steuergerät (4) der Multifunktions-Bedieneinrichtung die Betätigung eines Bedienelementes (11-14) erfaßt, das Bedienelement (11-14) identifiziert und den zugehörigen Hilfstext auf der Anzeigeeinrichtung (2) darstellt.

2. Vorrichtung nach Anspruch 1, dadurch gekennzeichnet, daß das Steuergerät (4) der Multifunktions-Bedieneinrichtung für die Bedienelemente (11-14) ein Optionsmenü umfaßt, das alternativ oder kumulativ zum zugehörigen Hilfstext aufrufbar ist.

3. Vorrichtung nach Anspruch 2, dadurch gekennzeichnet, daß der Multifunktions-Bedieneinrichtung ein Reset-Bedienelement zugeordnet ist, mittels dessen alle über die Optionsmenüs eingegebene Funktionseinstellungen rücksetzbar sind.

4. Vorrichtung nach Anspruch 2 oder 3, dadurch gekennzeichnet, daß die Einstellungen mittels des Optionsmenüs wahlweise temporär oder permanent vornehmbar sind.

5. Verfahren zur Nutzerführung in einem Kraftfahrzeug, mittels einer Vorrichtung nach einem der vorangegangenen Ansprüche, dadurch gekennzeichnet, daß die Multifunktions-Bedieneinrichtung in einem Nutzerführungsmodus geschaltet wird und der Nutzer ein Bedienelement (11-14) betätigt, zu dem dieser nähere Informationen wünscht, das Steuergerät (4) der Multifunktions-Bedieneinrichtung die Betätigung erfaßt, das betätigte Bedienelement (11-14) identifiziert und den zugehörigen Hilfstext auf der Anzeigeeinrichtung (2) darstellt.

6. Verfahren nach Anspruch 6, dadurch gekennzeichnet, daß im Nutzerführungsmodus durchgeführte Betätigungen von Bedienelementen (11-14) funktional nicht ausgeführt werden.
